# EUROPEAN PATENT SPECIFICATION

(11) **EP 4 495 347 B1**
(45) Date of publication and mention of the grant of the patent: **25.02.2026**
(21) Application number: 23186292.1
(22) Date of filing: 19.07.2023
(51) Int. Cl.: E04B 1/76, F16B 13/00, F16B 5/02, F16B 5/01

(54) **HOLDER**
HALTER
SUPPORT

(43) Date of publication of application: 22.01.2025
(73) Proprietor: Fröwis Aktiengesellschaft, 9486 Schaanwald (LI)
(72) Inventor: FRÖWIS, Markus, 9486 Schaanwald (LI)
(74) Representative: Torggler & Hofmann Patentanwälte - Innsbruck

(56) References cited:
- EP-A1- 3 101 188
- DE-A1- 102011 111 064

## Description

The present invention concerns holders for a material, such as insulating material and/or façade greening anchor, to be mounted to a building. Insulating material can for example be mineral wool, and/or rock wool, and/or foamed insulating material plates.

Such holders are previously known from EP 0811773 A2. Further developments in this area are disclosed in EP 3181770 A1, DE 22014009615 U, and DE 102011111064 A1. Document DE 10 2011 111064 A1 discloses all the features of the preamble of claim 1.

Such holders for insulating material are generally used to mount insulating material to a substrate, such as a wall of a building. For this, the at least one helical portion is screwed into the insulating material, a borehole is made in the substrate, a screw and potentially a fixing plug have to be positioned, and the screw has to be screwed into the borehole.

In many cases this procedure and the involved components work very well. In some particular cases difficulties can arise when the material of the substrate and the material to be mounted is quite hard or porous and the mounting device such as a screw is equally unlikely to deform(so-called hard screw joints). In these cases, it has to be taken care that the screw is not screwed into the substrate with too much torque. Otherwise, the screw may lose its grip in the substrate and the resulting spin may compromise the joint between the holder and the substrate. These problems have especially been observed when insulating material is to be mounted on a surface of so-called cement-particle-boards which comprise particles, e.g., wood particles or chips, and cement as a bonding material.

Another aspect which exacerbates the mentioned problem is that in practice the screws for mounting the holders together with the insulating material to the substrate are screwed in with a wide variety of different devices ranging from rotary hammer drills to cordless screwdrivers which exhibit a vast range of torque applied to the screw or the like.

An aim or object of the invention is to improve the fixing of insulating material, especially in hard joint cases, and/or a simplification of the mounting procedure.

In one aspect of the invention there is provided a holder for material to be mounted to a building comprising a base, wherein
- the base body has a mounting opening along a longitudinal axis of the base body for admitting a mounting device, in particular a screw,
- there is provided an intermediate piece configured to at least partially be arranged in the mounting opening and configured to receive the mounting device,
- viewed in a longitudinal cross-section an outer surface of the intermediate piece and/or an inner surface of the mounting opening is of tapering shape such that the intermediate piece can be introduced into the mounting opening and the intermediate piece can engage in a frictional connection with the mounting opening for mounting the holder together with the material to a substrate by way of the mounting device.

When the holder together with the material is being mounted to the substrate by way of the mounting device, such as a screw, the mounting device pulls the intermediate piece - preferably in a gliding manner - into the mounting opening of the base body of the holder until the mounting opening and the intermediate piece engage in the frictional connection because of the engaging taper.

The tapering shape of the outer surface of the intermediate piece and/or the inner surface of the mounting opening allow for a slower engagement of the frictional connection than the engagement of the screw or the like with the substrate according to the prior art. The danger that the screw loses purchase and turns without resistance can therefore be mitigated effectively. In essence, the hard screw joint mentioned before is therefore be transformed into a soft screw joint.

Even with very powerful or high-torque device for mounting the mounting device it is therefore easy for the operator to mount the mounting device - together with the holder and the material correctly.

At the same time, it is very easy to recognize cases in which the screw or other mounting device is not set or tapped correctly, because then mounting device will then not be able to pull the intermediate piece into the mounting opening in the expected way (automatic setting control of the mounting device). Formulated differently, if the mounting device is set properly, it biases the intermediate piece with a large enough amount so that it can be expected that the mounting device is set properly.

In particularly preferred embodiments of the invention both the outer surface of the intermediate piece and the inner surface of the mounting opening are of tapering shape. The mentioned advantages of the invention can in this way be optimized.

The tapering shape may be linearly tapering or non-linearly tapering.

For the purposes of this document a longitudinal cross-section may be understood as a cross-section which includes the longitudinal axis of the base body.

For the purposes of this document that the holder together with the material is mounted to the substrate by way of the mounting device may be understood to mean that the mounting device is in the natural way for the mounting device fastened to the substrate and exerting a mounting force on the intermediate piece, which in turn through the frictional connection holds the base body together with the at least one helical portion, which in turn holds the material. In summary, the material is mounted to the substrate by way of the mounting device in this way.

The natural way in which a mounting device is fastened to the substrate depends on the mounting device. For example, a screw connection works by way of positive lock and frictional connection between the flights of the screw to the material of the substrate, while a nail is essentially only fastened by the frictional connection, and a rivet in most cases essentially only by a positive lock connection.

The base body may be of essentially cylindrical outside shape to facilitate an easy screwing of the holder into the material. The longitudinal axis of the cylindrical base shape can then be thought of as the longitudinal axis of the base body.

According to the mentioned aspect of the invention the intermediate piece may be intermediate between the mounting device it receives and the base body of the holder.

That the mounting opening is fit for admitting the mounting device can in the context of the mentioned aspect of the invention be understood to mean that the mounting device is fit to admit the mounting device in particular when the mounting device is received in the intermediate piece.

In said aspect of the invention the frictional connection between the intermediate piece and the mounting opening may be realized by a frictional engagement between the inner surface of the mounting opening and the outer surface of the intermediate piece.

Particularly preferably, the engagement between the frictional connection between the mounting opening and the intermediate piece is such that the intermediate piece does not rotate relative to the base body while the mounting device is fastened to the substrate and/or when the intermediate piece is pulled into the mounting opening.

Particularly preferably, the frictional connection between the mounting opening and the intermediate piece is configured such that the base body can be rotated relative to the intermediate piece around the longitudinal axis by overcoming the holding force of the frictional connection, e.g., by rotating the base body with a drive tool engaged with a drive seat of the base body, after the mounting device has been fastened to the substrate and/or after the intermediate piece has been pulled into the mounting opening. In this way the longitudinal position of the at least one helical portion relative to the insulating material or other material, and thereby the longitudinal position of the insulating material or other material relative to the substrate, can be adjusted easily.

The substrate may be the wall of a building or any other structure which is to be furnished with insulating material or another material to be mounted to the building. The substrate could also be called mounting substrate or mounting ground. Generally, it can for example be understood as the body or surface of the body to which the material is to be mounted.

In a further aspect of the invention a method for mounting material to a substrate, in particular a building, comprises the following steps
- attaching the holder (at least the base body) according to the invention to the material, preferably by screwing the holder into the material, and
- mounting the holder, preferably together with the material, to the substrate by way of the mounting device
wherein at least one helical portion is arranged on the base body for screwing the holder into the into the insulating material or other material.

Using a holder according to the invention may greatly simplify the known method for mounting the holder together with the insulating material or other material to the substrate.

The holder may be attached to the material before, during and/or after mounting the holder to the substrate.

Protection is also sought for a set comprising the holder and the mounting device, in particular a screw.

Protection is furthermore sought for an arrangement, in particular a building, comprising the holder, the mounting device, and a substrate and/or building, preferably wherein the intermediate piece is engaged in the frictional connection with the mounting opening, the holder together with the material thereby being mounted to the substrate by way of the mounting device.

Of course, there may be more than one holder and mounting device being part of the arrangement. In particular, there may be more than one holder and mounting device piece of the material, e.g., per insulating plate, preferably four holders and mounting devices per insulating plate. An insulated building may have a large number of holders and corresponding mounting devices.

Protection is furthermore sought for the use of the holder and/or the set for mounting material to a substrate.

Buildings in the context of the invention may be any human-made structure with a substrate to which insulating material or other material, such as façade greening anchor, may be mounted, i.e., without restrictions regarding size or purpose. However, in particularly preferred embodiments the building is fit for humans entering.

By use of at least one helical portion arranged on the base body for screwing the holder into the into the insulating material or other material a very easy installation of the holder in the insulating material or other material and overall mounting of the insulating material or other material to the substrate is provided.

Further advantageous embodiments of the invention are defined in the dependent claims.

In other embodiments the holder may for example comprise a disk for example for holding the insulating material or other material from the outside.

The at least one helical portion, or the disk, or other features for holding the insulating material or other material may be formed integral with the base body or may be part of a separate component part which is movably or unmovably joined to the base body.

The holder may in particularly preferred embodiments comprise a stop for a drive for the mounting device which has the function of preventing the drive driving the mounting device once the mounting device has entered the mounting opening up to a pre-defined position.

In this way a natural limit can be placed on the torque exerted on the mounting device, in particular screw, which effectively prevents the mounting device losing purchase in the substrate.

Because of the taper according to the invention how deeply the intermediate piece gets pulled into the mounting opening translates into the magnitude of the biasing forces on the mounting device and hence the intermediate piece. Said stop makes use of this circumstance by simply preventing the drive for the mounting device to reach the mounting device when the biasing force is too high.

In preferred embodiments the tapering shape may be narrower on a first side of the base body to face the substrate (in a state where the holder is mounted to the substrate together with the material) and/or wider on a second side of the base body to face away from the substrate (in a state where the holder is mounted to the substrate together with the material).

The outer surface of the intermediate piece and/or the inner surface of the mounting opening may be of conical and/or cylindrical base shape.

In case of a conical shape of the outer surface of the intermediate piece and/or the inner surface of the mounting opening there is the tapering shape of the outer surface of the intermediate piece and/or the inner surface of the mounting opening in all longitudinal cross-sections.

In other embodiments the tapering shape is not present in all longitudinal cross-sections.

The outer surface of the intermediate piece and/or the inner surface of the mounting opening may comprise a number of superimposed structures, which comprise the tapering shape along a length of the intermediate piece. Here, the length of the intermediate piece may be measured along the longitudinal axis.

The superimposed structures may be understood as structures, such as ridges or the like, which are added to a base shape such as a conical or cylindrical base shape.

The superimposed structures may in particularly preferred embodiments be evenly distributed around the longitudinal axis of the base body.

The number of the superimposed structures may in preferred embodiments even, preferably four, eight, or twelve, in order to avoid.

In particularly preferred embodiments the superimposed structures may be essentially longitudinally tapering, preferably rounded, ridges, preferably arranged essentially in parallel with the longitudinal axis.

In other embodiments the tapering shape according to the invention can be realised as a series of successively narrowing movable or immovable pawls or similar superimposed structures each arranged at least partly circumferentially on the inner surface of the mounting opening and/or on the outer surface of the intermediate piece.

It is also conceivable to use mixed forms of superimposes structures which are for example disposed substantially helically on the inner surface of the mounting opening and/or on the outer surface of the intermediate piece.

The base body and the at least one helical portion may be made as one monolithic piece, preferably from a thermoplastic. For example, injection moulding or 3D-printing may be used to manufacture the base body together with the at least one helical portion and/or the intermediate piece.

The intermediate piece may be made from a thermoplastic, e.g., by injection moulding or 3D-printing.

The intermediate piece may comprise a longitudinal opening for guiding the mounting device. The longitudinal opening may be of cylindrical shape.

The intermediate piece may have a head portion, which may serve as a convenient support for a head of the mounting device, such as a screw head.

A width of the longitudinal opening may be smaller than the head, in particular screw head, of the mounting device. It is noted that this is also true, e.g., for countersunk head screws.

Protrusions may be arranged inside the longitudinal opening of the intermediate piece which protrusions are configured to prevent a frictional engagement between the longitudinal opening and the mounting device. This may help prevent the mounting device engaging with the intermediate piece which could lead to the intermediate piece rotating inside the mounting opening.

The base body may comprise a drive seat for a drive tool for screwing the base body together with the at least one helical portion into the insulating material or other material, preferably the drive seat may be arranged adjacent to the mounting opening along the longitudinal axis.

Preferably, the drive seat may be arranged in line with the longitudinal axis on a side of the base body facing away from the substrate in a state where the holder is mounted to the substrate together with the insulating material or other material.

The drive seat may be of square or hexagonal configuration, or more generally of polygonal configuration.

In particularly preferable embodiments the drive seat may also be used to adjust the longitudinal position of the at least one helical portion in the insulating material or other material. For this the frictional connection between the mounting opening and the intermediate piece is configured such that the base body can be rotated relative to the intermediate piece around the longitudinal axis by overcoming the holding force of the frictional connection.

In this way the longitudinal position of the at least one helical portion relative to the insulating material or other material, and thereby the longitudinal position of the insulating material or other material relative to the substrate can be adjusted easily, preferably after the insulating material or other material has been mounted to the substrate.

An advantage of the drive seat being arranged adjacent to the mounting opening along the longitudinal axis is that a head of the mounting device (such as a screw head) and/or the mounting device prevents access to the drive seat if the mounting device is not set properly. An operator is therefore automatically warned if the mounting device is not set properly.

The substrate may comprise a cement-particle-board (CPB), which may comprise particles, e.g., wood particles or chips, and cement as a bonding material.

The mounting device may in particular preferable embodiments a self-tapping screw. Using self-tapping screws can be advantageous because the initially described steps of making a borehole and the positioning the mounting device and potentially a fixing plug can be omitted. At the same time the holder according to the invention can virtually guarantee that the screw is set properly.

The material to be mounted to a building may for example be insulating material and/or a façade greening anchor.

The insulating material may be in the form of mineral wool, and/or rock wool, and/or foamed insulating material (e.g., EPS). The insulating material may be in plate form or other forms.

Further advantages and details of embodiments of the invention are evident from the figures and the accompanying description of the figures. The figures show the following:
- Fig. 1 to 5: an embodiment of a holder in several states during an embodiment of a method according to the invention,
- Fig. 6a to 6c: an embodiment of an intermediate piece,
- Fig. 7a to 7g: a further embodiment of an intermediate piece, and
- Fig. 8a to 8f: a further embodiment of an intermediate piece.

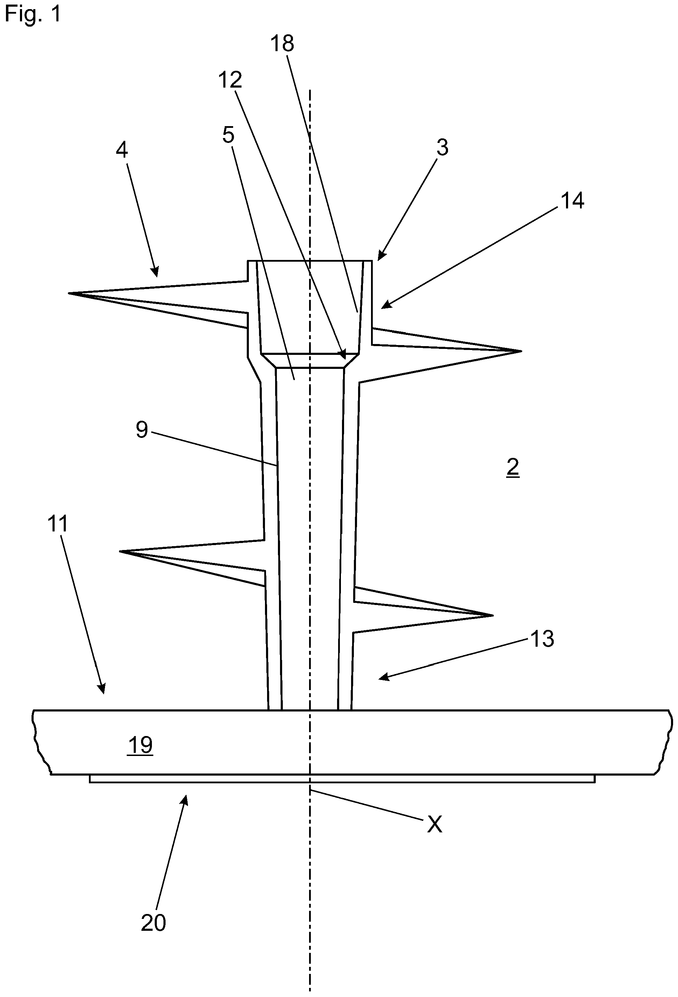

Fig. 1 shows a base body 3 of a holder 1 together with the at least one helical portion 4, in this case two helical portions 4, in a longitudinal cross-section along the longitudinal axis X of the base body 3.

The base body 3 together with the helical portions 4 has been screwed into insulating material 2 and gas been temporarily set against the substrate 11.

The insulating material 2 is in this case an insulating plate.

In this example, the substrate 11 comprises a cement-particle-board 19 which is itself mounted on a metal construction 20. In this example the cement-particle-board has a thickness of about 12mm.

The base body 3 comprises a mounting opening 5. The inner surface 9 of the mounting opening 5 comprises a tapering shape from a second side 14 of the base body 3 towards the first side 13 of the base body 3, i.e., the inner surface 9 of the mounting opening 5 is narrower at the first side 13 than at the second side 14.

The second side 14 is the side of the base body 3 facing away from the substrate 11, the first side 13 is the side of the base body 3 facing the substrate 11.

The base body 3 comprises a drive seat 18 for a drive tool (not pictured) for screwing the base body 3 together with the at least one helical portion 4 into the insulating material 2.

The drive seat 18 is arranged adjacent to the mounting opening 5 along the longitudinal axis X on the second side 14 of the base body facing away from the substrate 11.

The drive seat 18 is arranged in line with the longitudinal axis X on the side of the base body 3 facing away from the substrate 11.

The drive seat 18 in this embodiment is of square configuration, but could also be of hexagonal configuration, or more generally of polygonal configuration.

The drive tool can be coupled to the drive seat 18 to confer a turning motion onto the base body 3 such that the at least one helical portion 4 drives the base body 3 into the insulating material 2, resulting in the state depicted in Fig. 1.

In this embodiment there is a stop 12 arranged between the mounting opening 5 and the drive seat 18. The function of the stop 12 will be described below.

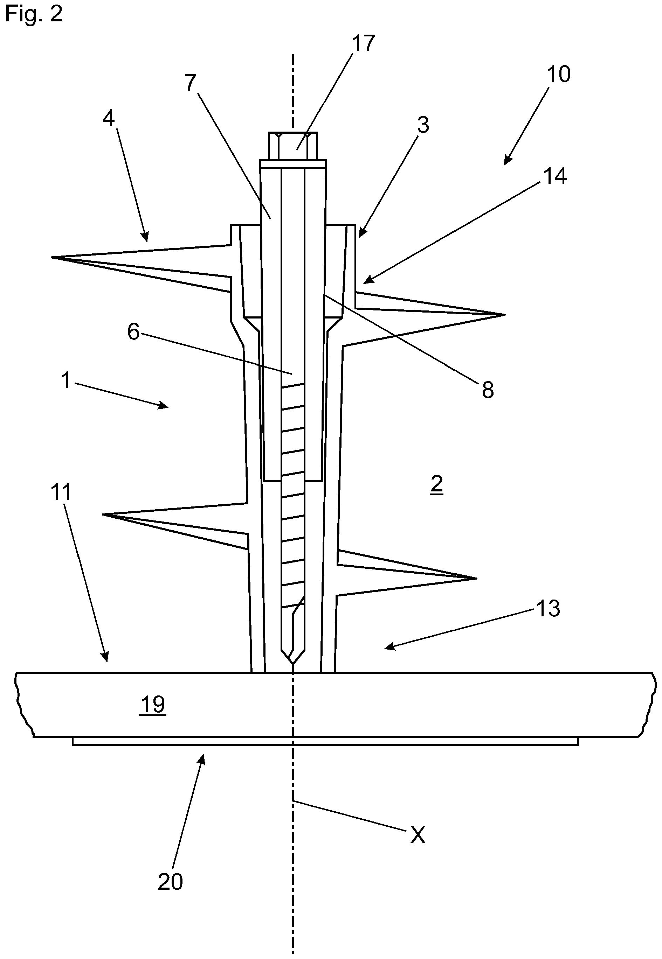

Fig. 2 shows the situation of Fig. 1 where the intermediate piece 7 together with a mounting device 6 is situated partially inside the mounting opening 5.

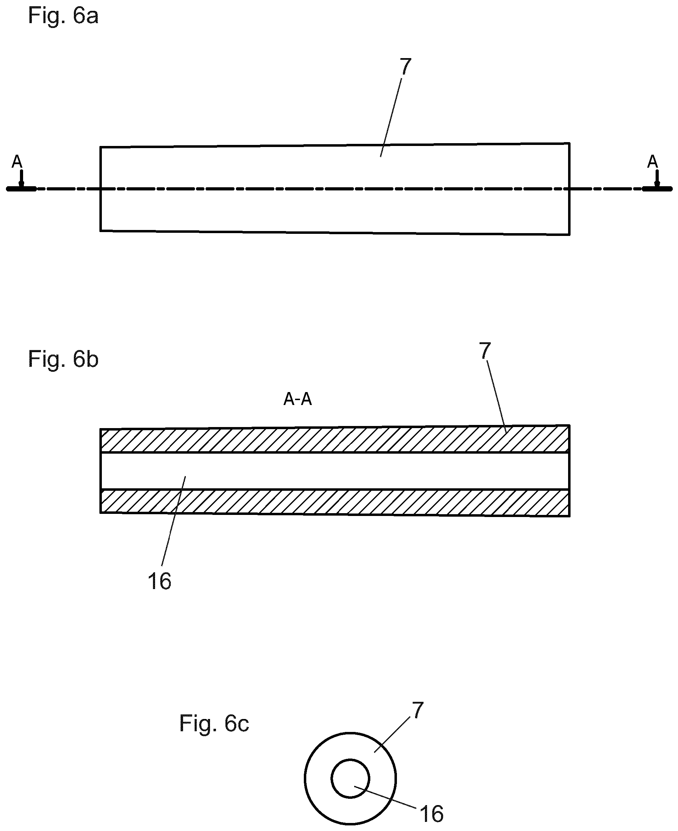

The intermediate piece 7 may be embodied for example as depicted in Fig. 6a to 6c, Fig. 7a to 7g, or Fig. 8a to 8f.

In this embodiment, in a longitudinal cross-section the outer surface 8 of the intermediate piece 7 also has a tapering shape corresponding to the tapering shape of the inner surface 9 of the base body 3.

The mounting device in this embodiment is a self-tapping screw which are in and of themselves known in the prior art.

The intermediate piece 7 comprises a longitudinal opening 16 for guiding the mounting device 6. The longitudinal opening 16 is in this embodiment of cylindrical shape and the mounting device 6 is arranged in the longitudinal opening 16.

The intermediate piece 7 may have a head portion 22, which may serve as a convenient support for a head 17 of the mounting device 6, i.e., the screw head of the self-tapping screw.

In this particular embodiment the self-tapping screw comprises a tip portion which is shaped similar to a tip portion of a masonry drill bit, and a thread with a larger diameter than the tip portion in order to allow the thread to find purchase in the substrate 11. Using tip portions which have the shape of a masonry drill bit have the advantage that they may easily penetrate the metal construction 20 often used together with cement-particle-boards.

In this embodiment the difference of the diameter of the thread and the width of the tip portion is 1.8mm.

It should be noted that the tip portion is drawn with the largest width oriented perpendicular to the drawing surface such that the largest width of the tip portion is not visible.

It may be appreciated, that while self-tapping screws can reduce the amount of work that has to be performed in many applications, there is a particular advantage in connection with the mounting of insulating material 2 because the bore holes need to be placed less precise regarding their location and the insulating material only needs to be positioned on the substrate 11 once.

The base body 3 and the at least one helical portion 4 are in this example as one monolithic piece from a thermoplastic through injection moulding. The intermediate piece is also made from a thermoplastic by injection moulding.

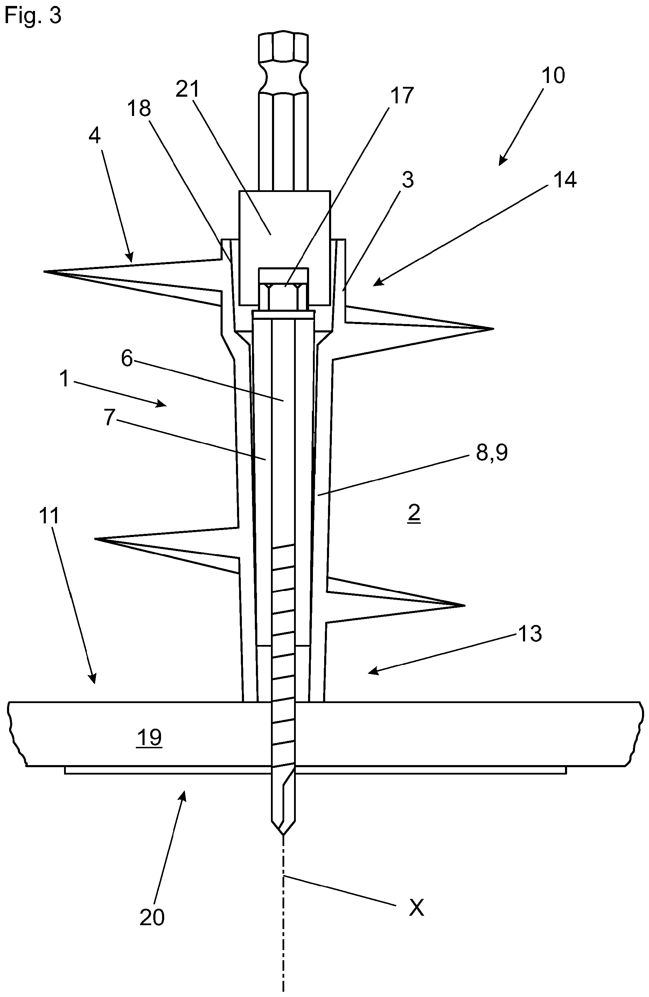

Fig. 3 shows the situation of Fig. 2 where mounting device 6 (self-tapping screw) is driven into the substrate 11 by driving it by means of a tool bit 21 which itself is driven, e.g., by a power drill. In other embodiments it would in principle be possible to first drill a hole and then mount the mounting device 6 making use of the drilled hole and a fixing plug. However, in preferred embodiments a self-tapping screw is used.

As can be seen from Fig. 3 the head 17 of the screw abuts against the intermediate piece 7 and therefore pulls it into the mounting opening 5. Accordingly, the outer surface 8 of the intermediate piece 7 comes into contact with the inner surface 9 of the mounting opening 5 of the base body 3 such that a frictional connection between the two surfaces is created. In this way, a biasing force is exerted by the head 17 of the mounting device 5 onto the intermediate piece 7, further onto the base body 3 (because of the frictional connection), and further onto the insulating material (because of the at least one helical portion 4) which is therefore pressed onto the substrate 11 fixing it thereto.

The magnitude of the biasing force my depend on the angle and surface properties of the taper, the length of the holder and/or mounting opening, and/or the involved materials and/or the involved mounting devices and/or the involved substrate. A person skilled in the art can determine the angle and surface properties of the taper by experimentation and/or simulations for example by varying the quantities mentioned above.

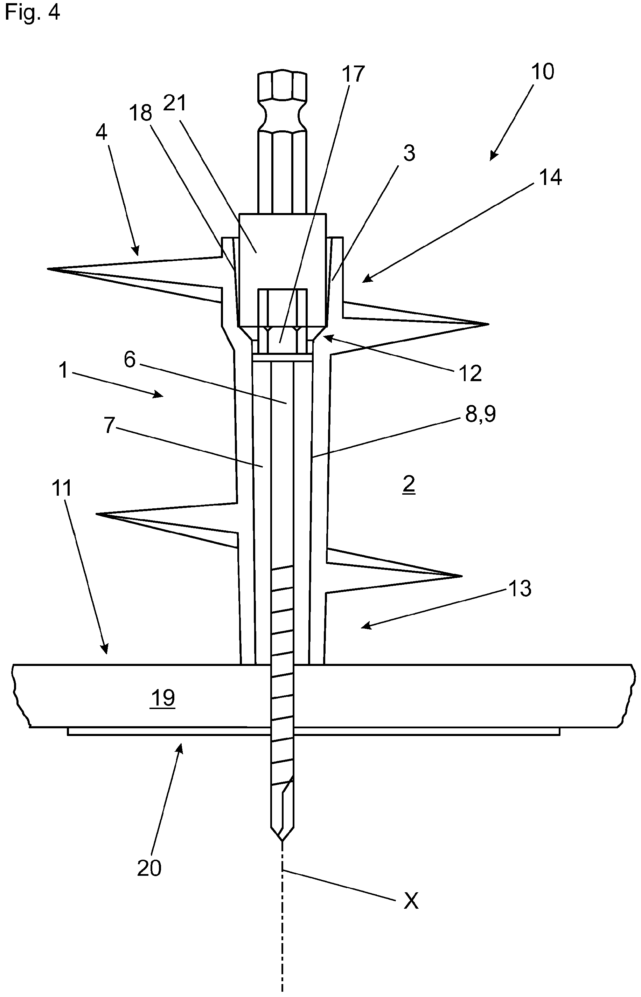

Fig. 4 shows the situation of Fig. 3 where the mounting device 6 has been pulled so far into the mounting opening 5 that the stop 12 prevents the drive **(i.e.,** the tool bit 21) from driving the mounting device.

In this way a natural limit is be placed on the torque exerted on the mounting device **6,** in particular screw, which effectively prevents the mounting device 6 losing purchase in the substrate 11.

The insulating material 2 is now mounted to the substrate 5 because of the biasing force of the mounting device 6 as mentioned above.

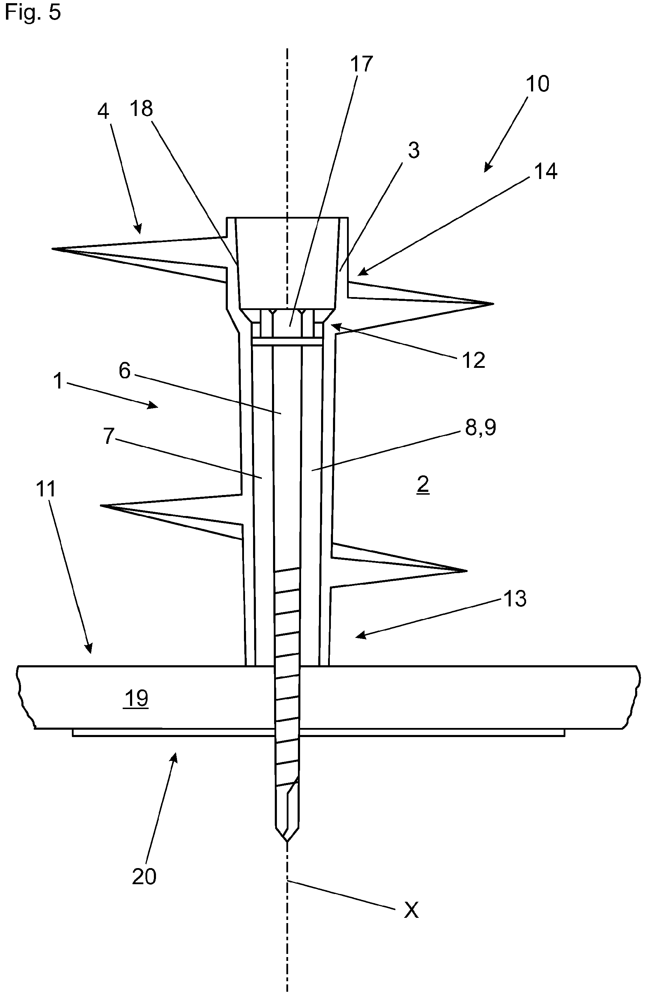

Fig. 5 shows the situation of Fig. 4 where the tool bit 21 has been removed.

Fig. 3 to 5 show the arrangement 10 according to the invention.

In this embodiment the drive seat 18 may also be used to adjust the longitudinal position of the at least one helical portion 4 in the insulating material 2. For this the frictional connection between the mounting opening 5 and the intermediate piece 7 is configured such that the base body 3 can be rotated relative to the intermediate piece 7 around the longitudinal axis X by overcoming the holding force of the frictional connection. In this way the longitudinal position of the at least one helical portion 4 relative to the insulating material 2, and thereby the longitudinal position of the insulating material 2 relative to the substrate 11 can be adjusted easily after the insulating material 2 has been mounted to the substrate 11.

The placement of the drive seat 18 being arranged adjacent to the mounting opening 5 along the longitudinal axis X allows for an automatic setting control of the mounting device 6 because the screw head and/or the intermediate piece 7 prevents access to the drive seat 18 if the screw is not set properly.

Fig. 6a to 6c show an embodiment of an intermediate piece 7 which can be used together with the invention in different views, namely a side view (Fig. 6a), a longitudinal cross section (Fig. 6b), and a view from the front (Fig. 6c).

The intermediate piece 7 according to these figures has a conical outer surface 8. Accordingly, the outer surface 8 of the intermediate piece 7 (and the inner surface 9 of the mounting opening 5) have the tapering shape according to the invention in all longitudinal cross-sections.

The intermediate piece 7 according to these figures has a cylindrical longitudinal opening 16.

The intermediate piece 7 according to these figures has a head portion 22 which may serve as a convenient support for a head 17 of the mounting device 6, such as a screw head (see Fig. 2 to 4).

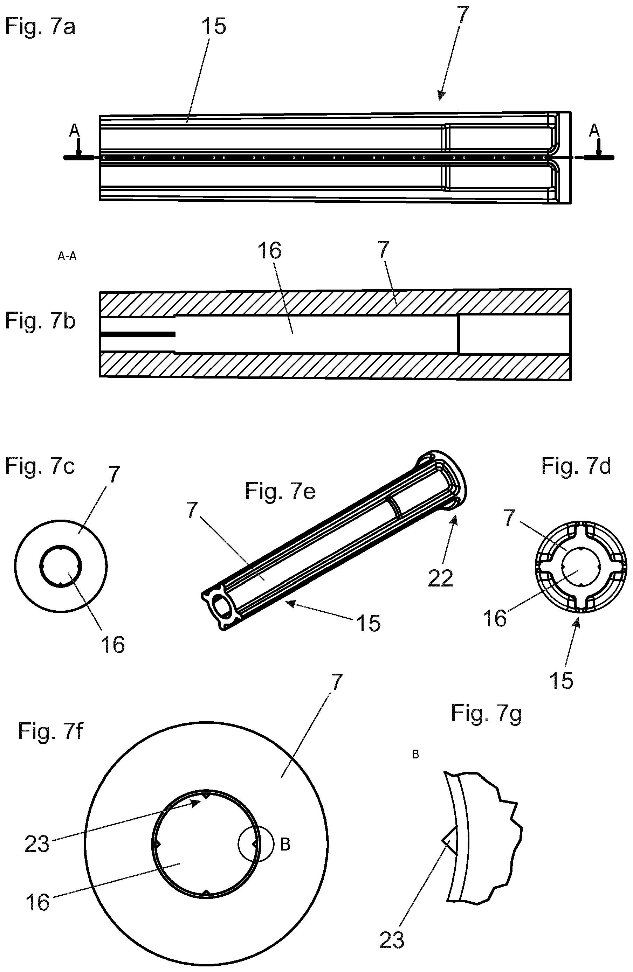

Fig. 7a to 7g show a further embodiment of an intermediate piece 7 which can be used together with the invention in different views, namely a side view (Fig. 7a), a longitudinal cross section (Fig. 7b), a view from the front (Fig. 6c), a view from the back (Fig. 7d), a perspective view (Fig. 7e), an enlarged front view (Fig. 7f), and Detail B of Fig. 7f (Fig. 7g).

In contrast to the embodiment of Fig. 6a to 6c the embodiment of Fig. 7a to 7g comprises an intermediate piece 7 of cylindrical base shape with four superimposed structures 15, which comprise the tapering shape along a length of the intermediate piece 7. The length of the intermediate piece 7 is measured along the longitudinal axis X.

The superimposed structures 7 may be understood as structures, such as ridges or the like, which are added to a base shape such as the conical base shape.

The superimposed structures 15 are in these embodiments evenly distributed around the longitudinal axis X of the base body 3.

In this embodiment the superimposed structures 15 are essentially longitudinally tapering, rounded ridges which are arranged essentially in parallel with the longitudinal axis X.

In such embodiments the tapering shape is not present in all longitudinal cross-sections, but only such longitudinal cross-sections which include the superimposes structures 15.

The detail B in Fig. 7g shows one of several protrusions 23 arranged in the longitudinal opening 16 which prevent the mounting device 6 engaging with the intermediate piece 7 which could lead to the intermediate piece 7 rotating inside the mounting opening 5. Not all of the protrusions 23 are furnished with reference numerals to prevent cluttering of the figures.

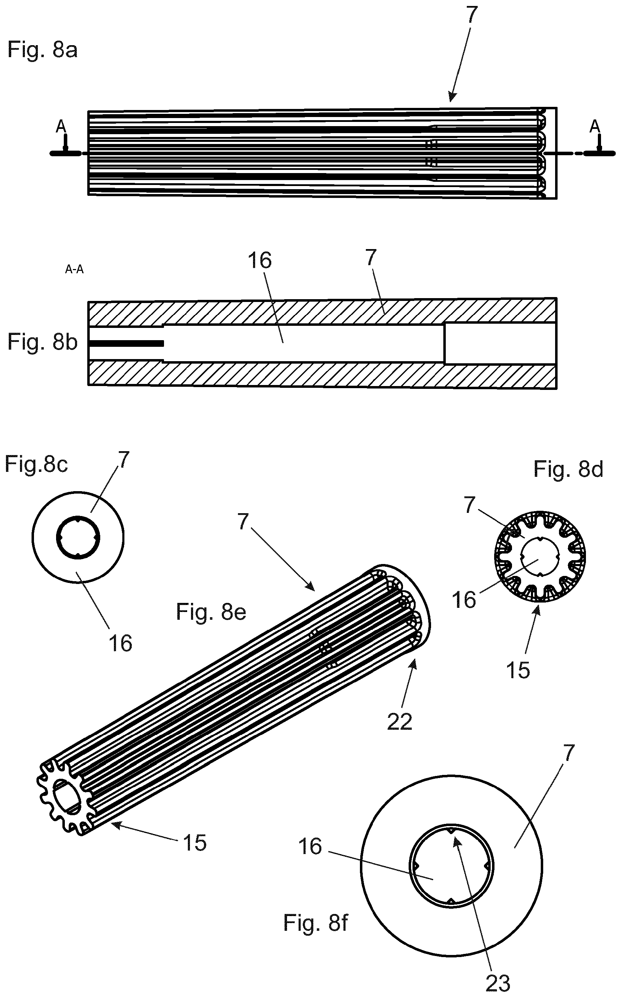

Fig. 8a to 8f show a further embodiment of an intermediate piece 7 which can be used together with the invention in different views, namely a side view (Fig. 8a), a longitudinal cross section (Fig. 8b), a view from the front (Fig. 8c), a view from the back (Fig. 8d), a perspective view (Fig. 8e), and a detailed view (Fig. 8f).

The embodiment of Fig. 8a to 8f are essentially analogous to the embodiment of Fig. 7a to 7g with the difference that there are eight superimposed structures 15 distributed evenly around the circumference of the intermediate piece 7.

Other elements of the embodiments of Fig. 7a to 7g and Fig. 8a to 8f, such as the longitudinal opening 16 and the head portion 22, are analogous to the embodiment of Fig. 6a to 6c.

It should be noted that the superimposed structures 15 making up the tapering shape according to the invention could additionally or alternatively be used on the inner surface of the mounting opening.

The superimposes structures 15 and other surface properties of the intermediate piece 7 and the mounting opening 5 of the base body 3 can be designed or modify to fine tune the desired magnitude of the biasing force which is exerted by the mounting device 6 onto the holder 1.

### List of reference numerals:

- 1: holder
- 2: material
- 3: base body
- 4: at least one helical portion
- 5: mounting opening
- 6: mounting device
- 7: intermediate piece
- 8: outer surface (of the intermediate piece)
- 9: inner surface (of the mounting opening)
- 10: arrangement
- 11: substrate
- 12: stop
- 13: first side (of the base body)
- 14: second side (of the base body)
- 15: superimposed structures
- 16: longitudinal opening (of the intermediate piece)
- 17: head (of the mounting device)
- 18: drive seat
- 19: cement particle board
- 20: metal construction
- 21: tool bit
- 22: head portion
- 23: protrusions

- X: longitudinal axis

## Claims

1. Holder for a material (2), such as insulating material (2) and/or a façade greening anchor, to be mounted to a building comprising a base body (3), wherein
- at least one helical portion (4) is arranged on the base body (3) for screwing the holder (1) into the insulating material (2) or other material (2),
- the base body (3) has a mounting opening (5) along a longitudinal axis (X) of the base body (3) for admitting a mounting device (6), in particular a screw,
- there is provided an intermediate piece (7) configured to at least partially be arranged in the mounting opening (5) and configured to receive the mounting device (6),
**characterized in that** viewed in a longitudinal cross-section an outer surface (8) of the intermediate piece (7) and/or an inner surface (9) of the mounting opening (5) is of tapering shape such that the intermediate piece (7) can be introduced into the mounting opening (5) and the intermediate piece (7) can engage in a frictional connection with the mounting opening (5) for mounting the holder (1) together with the material (2) to a substrate (11) by way of the mounting device (6)

2. The holder of claim 1, wherein the holder (1) comprises a stop (12) for a drive for the mounting device (6) which has the function of preventing the drive driving the mounting device (6) once the mounting device (6) has entered the mounting opening (5) up to a pre-defined position.

3. The holder of one of the preceding claims, wherein the tapering shape is narrower on a first side (13) of the base body (3) to face the substrate (11) and/or wider on a second side (14) of the base body (3) to face away from the substrate (11).

4. The holder of one of the preceding claims, wherein the outer surface (8) of the intermediate piece (7) and/or the inner surface (9) of the mounting opening (5) is of conical and/or cylindrical base shape.

5. The holder of one of the preceding claims, wherein the outer surface (8) of the intermediate piece (7) and/or the inner surface (9) of the mounting opening (5) comprises a number of superimposed structures (15), which comprise the tapering shape along a length of the intermediate piece (7).

6. The holder of one of the preceding claims, wherein the intermediate piece (7) comprises a longitudinal opening (16) for guiding the mounting device (6).

7. The holder of claim 6, wherein a width of the longitudinal opening (16) is smaller than a head (17), in particular screw head, of the mounting device (6).

8. The holder according to one of the preceding claims, wherein the base body comprises a drive seat (18) for a drive tool for screwing the base body together with the at least one helical portion (4) into the insulating material (2) or other material (2), preferably wherein the drive seat (18) is arranged adjacent to the mounting opening (5) along the longitudinal axis (X), such that a head (17) of the mounting device (6) and/or the intermediate piece (7) prevents access to the drive seat (18) if the mounting device (6) is not set properly.

9. Set comprising the holder (1) according to one of the preceding claims and the mounting device (6), in particular a screw.

10. Arrangement, in particular a building, comprising the holder (1) according to one of the claims 1 to 8, the mounting device (6), and a substrate (11) and/or building, preferably wherein the intermediate piece (7) is engaged in the frictional connection with the mounting opening (5), the holder (1) together with the material thereby being mounted to the substrate (11) by way of the mounting device (6).

11. The set according to claim 9 and/or the arrangement according to claim 10, wherein
- the substrate (11) comprises a cement particle board and/or
- the mounting device (6) is a self-tapping screw and/or
- the material (2) is insulating material.

12. Method for mounting a material (2) to a substrate (11), in particular a building, the method comprising the following steps
- attaching the holder (1) according to one of the claims 1 to 8 to the material (2), preferably by screwing the holder (1) into the material (2), and
- mounting the holder (1), preferably together with the material (2), to the substrate (11) by way of the mounting device (6).

13. The method according to claim 12, comprising using a self-tapping screw as the mounting device (6).

14. Use of the holder according to the claims 1 to 8 and/or the set according to claim 9 for mounting the material (2) to a substrate (11).

## Patentansprüche

1. Halterung für ein Material (2), wie beispielsweise Isoliermaterial (2) und/oder Fassadenbegrünungsanker, zur Befestigung an einem Gebäude, bestehend aus einem Grundkörper (3), wobei
- mindestens ein schraubenförmiger Abschnitt (4) am Grundkörper (3) angeordnet ist, um die Halterung (1) in das Isoliermaterial (2) oder ein anderes Material (2) einzuschrauben,
- der Grundkörper (3) eine Befestigungsöffnung (5) entlang einer Längsachse (X) des Grundkörpers (3) zur Aufnahme einer Befestigungsvorrichtung (6), insbesondere einer Schraube, aufweist,
- ein Zwischenstück (7) vorgesehen ist, das so ausgebildet ist, dass es zumindest teilweise in der Befestigungsöffnung (5) angeordnet werden kann und die Befestigungsvorrichtung (6) aufnehmen kann,
**dadurch gekennzeichnet, dass**
in einem Längsschnitt betrachtet eine Außenfläche (8) des Zwischenstücks (7) und/oder eine Innenfläche (9) der Befestigungsöffnung (5) derart verjüngt ist, dass das Zwischenstück (7) in die Befestigungsöffnung (5) einführbar ist und das Zwischenstück (7) mit der Befestigungsöffnung (5) in einen Reibschluss eingreifen kann, um den Halter (1) zusammen mit dem Material (2) über die Befestigungsvorrichtung (6) an einem Untergrund (11) zu befestigen.

2. Die Halterung nach Anspruch 1, wobei die Halterung (1) einen Anschlag (12) für einen Antrieb für die Befestigungsvorrichtung (6) umfasst, der die Funktion hat, zu verhindern, dass der Antrieb die Befestigungsvorrichtung (6) antreibt, sobald die Befestigungsvorrichtung (6) in die Befestigungsöffnung (5) bis zu einer vordefinierten Position eingedrungen ist.

3. Die Halterung nach einem der vorangehenden Ansprüche, wobei die sich verjüngende Form auf einer ersten Seite (13) des Grundkörpers (3), die dem Untergrund (11) zugewandt ist, schmaler und/oder auf einer zweiten Seite (14) des Grundkörpers (3), die vom Untergrund (11) abgewandt ist, breiter ist.

4. Die Halterung nach einem der vorangehenden Ansprüche, wobei die Außenfläche (8) des Zwischenstücks (7) und/oder die Innenfläche (9) der Befestigungsöffnung (5) eine konische und/oder zylindrische Grundform aufweist.

5. Die Halterung nach einem der vorangehenden Ansprüche, wobei die Außenfläche (8) des Zwischenstücks (7) und/oder die Innenfläche (9) der Befestigungsöffnung (5) eine Anzahl von übereinanderliegenden Strukturen (15) umfasst, die entlang einer Länge des Zwischenstücks (7) die sich verjüngende Form aufweisen.

6. Die Halterung nach einem der vorangehenden Ansprüche, wobei das Zwischenstück (7) eine Längsöffnung (16) zum Führen der Befestigungsvorrichtung (6) umfasst.

7. Die Halterung nach Anspruch 6, wobei die Breite der Längsöffnung (16) kleiner ist als ein Kopf (17), insbesondere ein Schraubenkopf, der Befestigungsvorrichtung (6).

8. Die Halterung nach einem der vorangehenden Ansprüche, wobei der Grundkörper einen Antriebssitz (18) für ein Antriebswerkzeug zum Einschrauben des Grundkörpers zusammen mit dem mindestens einen schraubenförmigen Abschnitt (4) in das Isoliermaterial (2) oder ein anderes Material (2) umfasst, vorzugsweise wobei der Antriebssitz (18) entlang der Längsachse (X) benachbart zur Befestigungsöffnung (5) angeordnet ist, so dass ein Kopf (17) der Befestigungsvorrichtung (6) und/oder das Zwischenstück (7) den Zugang zum Antriebssitz (18) verhindert, wenn die Befestigungsvorrichtung (6) nicht richtig eingestellt ist.

9. Set bestehend aus der Halterung (1) nach einem der vorangehenden Ansprüche und der Befestigungsvorrichtung (6), insbesondere einer Schraube.

10. Anordnung, insbesondere ein Gebäude, umfassend die Halterung (1) nach einem der Ansprüche 1 bis 8, die Befestigungsvorrichtung (6) und ein Untergrund (11) und/oder Gebäude, vorzugsweise wobei das Zwischenstück (7) in die Reibungsverbindung mit der Befestigungsöffnung (5) eingreift, wobei die Halterung (1) zusammen mit dem Material dadurch über die Befestigungsvorrichtung (6) an dem Untergrund (11) befestigt wird.

11. Das Set nach Anspruch 9 und/oder die Anordnung nach Anspruch 10, wobei
- der Untergrund (11) eine Zementspanplatte umfasst und/oder
- die Befestigungsvorrichtung (6) eine selbstschneidende Schraube ist und/oder
- das Material (2) ein Isoliermaterial ist.

12. Verfahren zum Befestigen eines Materials (2) an einem Untergrund (11), insbesondere einem Gebäude, wobei das Verfahren die folgenden Schritte umfasst
- Anbringen der Halterung (1) nach einem der Ansprüche 1 bis 8 an dem Material (2), vorzugsweise durch Einschrauben der Halterung (1) in das Material (2), und
- Befestigen der Halterung (1), vorzugsweise zusammen mit dem Material (2), an dem Untergrund (11) mittels der Befestigungsvorrichtung (6).

13. Verfahren nach Anspruch 12, umfassend die Verwendung einer selbstschneidenden Schraube als Befestigungsvorrichtung (6).

14. Verwendung der Halterung nach den Ansprüchen 1 bis 8 und/oder des Sets nach Anspruch 9 zum Befestigen des Materials (2) an einem Untergrund (11).

## Revendications

1. Support pour un matériau (2), tel qu'un matériau isolant (2) et/ou une pièce d'ancrage de verdissement de façade, devant être monté sur un bâtiment comportant un corps de base (3), dans lequel
- au moins une partie hélicoïdale (4) est agencée sur le corps de base (3) pour visser le support (1) dans le matériau isolant (2) ou un autre matériau (2),
- le corps de base (3) présente une ouverture de montage (5) le long d'un axe longitudinal (X) du corps de base (3) pour accueillir un dispositif de montage (6), en particulier une vis,
- il est prévu une pièce intermédiaire (7) configurée pour être agencée au moins partiellement dans l'ouverture de montage (5) et configurée pour recevoir le dispositif de montage (6),
**caractérisé en ce que**, dans une vue en coupe longitudinale, une surface externe (8) de la pièce intermédiaire (7) et/ou une surface interne (9) de l'ouverture de montage (5) sont de forme conique de sorte que la pièce intermédiaire (7) puisse être introduite dans l'ouverture de montage (5) et que la pièce intermédiaire (7) puisse venir en prise dans une liaison par frottement avec l'ouverture de montage (5) pour monter le support (1) avec le matériau (2) sur un substrat (11) au moyen du dispositif de montage (6).

2. Support selon la revendication 1, dans lequel le support (1) comporte une butée (12) pour un entraînement du dispositif de montage (6) qui a pour fonction d'empêcher l'entraînement d'entraîner le dispositif de montage (6) une fois que le dispositif de montage (6) est entré dans l'ouverture de montage (5) jusqu'à une position prédéfinie.

3. Support selon l'une des revendications précédentes, dans lequel la forme conique est plus étroite sur un premier côté (13) du corps de base (3) pour faire face au substrat (11) et/ou plus large sur un second côté (14) du corps de base (3) pour faire face à l'opposé du substrat (11).

4. Support selon l'une des revendications précédentes, dans lequel la surface externe (8) de la pièce intermédiaire (7) et/ou la surface interne (9) de l'ouverture de montage (5) présentent une forme de base conique et/ou cylindrique.

5. Support selon l'une des revendications précédentes, dans lequel la surface externe (8) de la pièce intermédiaire (7) et/ou la surface interne (9) de l'ouverture de montage (5) comportent un certain nombre de structures superposées (15), qui comportent la forme conique le long d'une longueur de la pièce intermédiaire (7).

6. Support selon l'une des revendications précédentes, dans lequel la pièce intermédiaire (7) comporte une ouverture longitudinale (16) pour le guidage du dispositif de montage (6).

7. Support selon la revendication 6, dans lequel une largeur de l'ouverture longitudinale (16) est inférieure à une tête (17), en particulier une tête de vis, du dispositif de montage (6).

8. Support selon l'une des revendications précédentes, dans lequel le corps de base comporte un siège d'entraînement (18) pour un outil d'entraînement pour visser le corps de base conjointement avec l'au moins une partie hélicoïdale (4) dans le matériau isolant (2) ou un autre matériau (2), de préférence dans lequel le siège d'entraînement (18) est agencé adjacent à l'ouverture de montage (5) le long de l'axe longitudinal (X), de sorte qu'une tête (17) du dispositif de montage (6) et/ou la pièce intermédiaire (7) empêchent l'accès au siège d'entraînement (18) si le dispositif de montage (6) n'est pas réglé correctement.

9. Ensemble comportant le support (1) selon l'une des revendications précédentes et le dispositif de montage (6), notamment une vis.

10. Agencement, notamment bâtiment, comportant le support (1) selon l'une des revendications 1 à 8, le dispositif de montage (6), et un substrat (11) et/ou bâtiment, de préférence dans lequel la pièce intermédiaire (7) est en prise dans la liaison par frottement avec l'ouverture de montage (5), le support (1) conjointement avec le matériau étant ainsi monté sur le substrat (11) au moyen du dispositif de montage (6).

11. Ensemble selon la revendication 9 et/ou agencement selon la revendication 10, dans lesquels
- le substrat (11) comporte un panneau de particules de ciment et/ou
- le dispositif de montage (6) est une vis autotaraudeuse et/ou
- le matériau (2) est un matériau isolant.

12. Procédé de montage d'un matériau (2) sur un substrat (11), en particulier un bâtiment, le procédé comportant les étapes suivantes
- la fixation du support (1) selon l'une des revendications 1 à 8 au matériau (2), de préférence par vissage du support (1) dans le matériau (2), et
- le montage du support (1), de préférence conjointement avec le matériau (2), sur le substrat (11) au moyen du dispositif de montage (6).

13. Procédé selon la revendication 12, comportant l'utilisation d'une vis autotaraudeuse comme dispositif de montage (6).

14. Utilisation du support selon les revendications 1 à 8 et/ou de l'ensemble selon la revendication 9 pour monter le matériau (2) sur un substrat (11).
